# EUROPEAN PATENT APPLICATION

(11) **EP 1 785 309 A2**
(43) Date of publication of application: **16.05.2007**
(21) Application number: 06123158.5
(22) Date of filing: 30.10.2006
(51) Int. Cl.: B60L 7/00

(54) **A method of controlling a vehicle having a regenerative braking system**

(30) Priority: 14.11.2005 US 164195
(71) Applicant: Ford Global Technologies, LLC, Dearborn, MI 48126 (US)
(72) Inventor: Shaffer, Aric, Ypsilanti, MI 48197 (US); Schneider, Michael, Bloomfield Twp., MI 48304 (US)
(74) Representative: Messulam, Alec Moses

(57) **Abstract**

A system and method for controlling a regenerative braking system of a motor vehicle 10 are disclosed. In the case of a rear drive vehicle the method includes the steps of determining whether a front wheel 35 of the vehicle 10 is experiencing a wheel slip event and compensating, at a determined rate, the braking torque applied to a rear wheel 36, upon determining whether the front wheel 35 of the vehicle 10 is experiencing the wheel slip event.

## Description

The present invention relates to a method for operating a hybrid electric vehicle and in particular to a method for controlling regenerative braking of the hybrid electric vehicle.

Regenerative braking systems seek to recover the kinetic energy of a vehicle, which is normally dissipated as heat by conventional hydraulic friction braking systems. The recovery of the kinetic energy occurs during braking via an electric motor that operates as a generator to restore power to a battery or other energy storage device. As commonly known, vehicles equipped with regenerative braking systems may also have anti-lock braking systems (ABS) that improve vehicle control and stability in the event of wheel slip. However, when a wheel slip condition occurs, the anti-lock brake system customarily causes disengagement of the regenerative braking system. Consequently, the vehicle operator experiences a lunge forward feeling due to the instantaneous loss of braking torque and deceleration. This sudden loss of deceleration is undesirable to the vehicle operator.

It is an object of the invention to provide an improved method for controlling a regenerative braking system.

According to a first aspect of the invention there is provided a method of controlling a vehicle having multiple wheels and a regenerative braking system for applying a braking torque to at least one of the wheels characterised in that the method comprises applying a braking torque to one wheel, determining whether a second wheel is experiencing an anti-lock braking system (ABS) event and compensating at a determined rate the braking torque applied to the one wheel upon determining whether the second wheel is experiencing the ABS event.

The method may further comprise determining whether the one wheel is experiencing an ABS event.

The method may further comprise applying braking torque to the one wheel upon determining that the ABS event has ended.

Compensating, at the determined rate, the braking torque applied to the one wheel may include reducing the braking torque applied to the one wheel.

The one wheel may include at least one wheel of a set of rear wheels of the vehicle and the second wheel may include at least one wheel of a set of front wheels of the vehicle.

The vehicle may be a hybrid-electric vehicle having at least one electric machine and the method may further comprise applying regenerative braking torque to the rear wheels, determining whether the front wheels are experiencing an anti-lock braking system (ABS) event, through the use of an anti-lock braking system and compensating, at a determined rate, the regenerative braking torque being applied to the rear wheels upon determining that the front wheels are experiencing the ABS event, the regenerative braking torque being generated by the at least one electric machine.

The at least one electric machine may be at least one of an electric motor and an electric generator.

Compensating, at the determined rate, the regenerative braking torque being applied to the rear wheels may include reducing the braking torque applied to the rear wheels.

The method may further comprise determining whether the rear wheels are experiencing an ABS event and compensating the regenerative braking torque applied to the rear wheels upon determining whether the rear wheels are experiencing the ABS event.

Compensating the braking torque applied to the rear wheels may include substantially reducing the regenerative braking torque being applied to the rear wheels.

The method may further comprise applying regenerative braking torque to the rear wheels upon determining that the ABS event has ended.

The regenerative braking torque applied to the rear wheels may be applied subsequent to the expiration of a timer.

According to a second aspect of the invention there is provided a vehicle having multiple wheels and a regenerative braking system for applying a braking torque to at least one of the wheels characterised in that the vehicle is configured to apply a braking torque to one wheel, determine whether at least a second wheel is experiencing an anti-lock braking system (ABS) event and, at a determined rate, compensate the regenerative braking torque applied to the one wheel upon determining that the second wheel is experiencing the ABS event.

The vehicle may be further configured to determine whether the one wheel is experiencing an ABS event and is further configured to enable the application of regenerative braking torque to the one wheel upon determining that the ABS event has ended.

The vehicle may be configured to compensate, at the determined rate, the regenerative braking torque applied to the one wheel by reducing the regenerative braking torque applied to the one wheel.

Determining whether the second wheel is experiencing an ABS event may include determining whether an anti-lock braking (ABS) event has occurred.

The one wheel may be at least one of a set of rear vehicle wheels.

The second wheel may be at least one of a set of front vehicle wheels.

The invention will now be described by way of example with reference to the accompanying drawing of which:-
Figure 1 illustrates a vehicle having a regenerative braking system according to an embodiment of the present invention; and
Figure 2 illustrates a flow diagram for a method for controlling a regenerative braking system in accordance with an embodiment of the present invention.

By way of example, a system and method for implementing the present invention is described below. The system and methodology may be adapted, modified or rearranged to best fit a particular implementation without departing from the scope of the present invention.

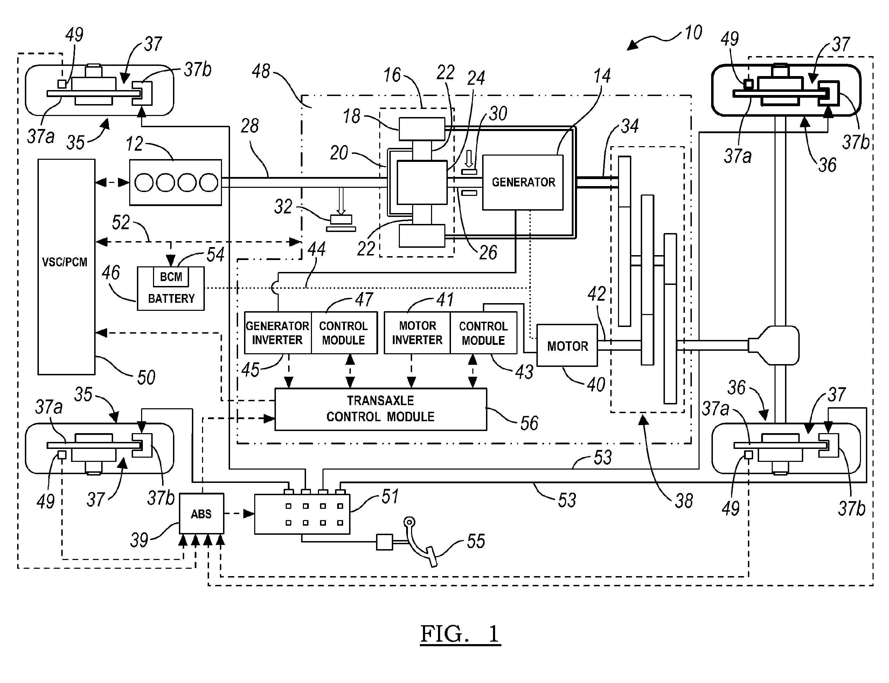

Figure 1 illustrates a schematic representation of a vehicle 10 in accordance with one embodiment of the present invention. The vehicle 10 includes an engine 12 and an electric machine, such as generator 14. The engine 12 and the generator 14 are connected through a power transfer unit, which in this embodiment is a planetary gear set 16. Of course, other types of power transfer units, including other gear sets and transmissions, may be used to connect the engine 12 to the generator 14. The planetary gear set includes a ring gear 18, a carrier 20, planet gears 22, and a sun gear 24.

The generator 14 can also be used as a motor, outputting torque to a shaft 26 connected to the sun gear 24. Similarly, the engine 12 outputs torque to a shaft 28 connected to the carrier 20.

A brake 30 is in this case provided for stopping rotation of the shaft 26, thereby locking the sun gear 24 in place. Because this configuration allows torque to be transferred from the generator 14 to the engine 12, a one-way clutch 32 may be provided so that the shaft 28 rotates in only one direction. Having the generator 14 operatively connected to the engine 12, as shown in Figure 1, allows the speed of the engine 12 to be controlled by the generator 14. It will be appreciated that alternative embodiments may not include the brake 30 and/or the clutch 32.

The ring gear 18 is connected to a shaft 34, which is connected to rear vehicle drive wheels 36 through a second gear set 38. Additionally, the vehicle 10 includes a set of front wheels 35 that may be directly coupled to engine 12.

The vehicle 10 includes a second electric machine, or motor 40, which can be used to output torque to a shaft 42. Other vehicles within the scope of the present invention may have different electric machine arrangements, such as more or less than two electric machines.

In the embodiment shown in Figure 1, the motor 40 and the generator 14 can both be used as motors to output torque. Alternatively, each can also be used as a generator, outputting electrical power to a high voltage bus 44 and to an energy storage device, or battery 46.

The battery 46 is a high voltage battery that is capable of outputting electrical power to operate the motor 40 and the generator 14. Other types of energy storage devices and/or output devices can be used with a vehicle, such as the vehicle 10. For example, a device such as a capacitor can be used, which, like a high voltage battery, is capable of both storing and outputting electrical energy. Alternatively, a device such as a fuel cell may be used in conjunction with a battery and/or capacitor to provide electrical power for the vehicle 10.

As shown in Figure 1, the motor 40, the generator 14, the planetary gear set 16, and a portion of the second gear set 38 may generally be referred to as a transaxle 48. The transaxle 48 is analogous to a transmission in a conventional vehicle. Thus, when a driver selects a particular gear, the transaxle 48 is appropriately controlled to operate according to the gear selection. To control the engine 12 and the components of the transaxle 48 such as the generator 14 and motor 40, a control system, including a first controller 50, is provided.

As shown in Figure 1, the controller 50 is a combination vehicle system controller and powertrain control module (VSC/PCM). Although it is shown as a single hardware device, it may include multiple controllers in the form of multiple hardware devices, or multiple software controllers within one or more hardware devices. The controller 50 logic, including logic associated with other controllers (e.g., TCM 56) may be partitioned in any number of ways without imposing any limitation on the claimed invention.

A controller area network (CAN) 52 allows the controller 50 to communicate with the transaxle 48 and a battery control module (BCM) 54. Just as the battery 46 has the BCM 54, other devices controlled by the controller 50 may have their own controllers. For example, an engine control unit (ECU) may communicate with the controller 50 and may perform control functions on the engine 12. In addition, the transaxle 48 may include one or more controllers, such as a transaxle control module (TCM)56, configured to control specific components within the transaxle 48, such as the generator 14 and/or the motor 40. Accordingly, as shown in Figure 1, the TCM 56 communicates with a generator inverter 45 and a motor inverter 41. In one embodiment, the generator inverter 45 and the motor inverter 41 are coupled to a control module 47 and a control module 43, respectively. Control modules 43 and 47 are capable of converting raw vehicle sensor data readings to a format compatible with the TCM 56 and sending those readings to the TCM 56.

Although the vehicle 10, shown in Figure 1, is a HEV, it is understood that the present invention can be used for of other types of vehicles. In addition, although the vehicle 10 shown in Figure 1 is a parallel-series HEV, the present invention is not limited to HEV's having such a "powersplit" configuration. Furthermore, although the vehicle 10 is illustrated having a single motor (i.e., motor 40), other embodiments may include additional motors without departing from the scope of the present invention. Thus, the present invention is applicable to an alternative embodiment of vehicle 10 having a motor, such as motor 40, coupled directly to a front axle (not shown) of front wheels 35. Additionally, in alternative embodiments the vehicle 10 may be a fuel-cell vehicle.

As shown, vehicle 10 further includes friction brakes 37. Brakes 37 include a brake disc 37a, a caliper 37b, and a speed sensor 49 that communicates with an anti-lock braking system (ABS) module 39. Caliper 37b is operable with brake disc 37a for slowing and/or stopping vehicle 12. ABS module 39 is operable with a pressure adjustment unit 51. In response to a brake request from a brake pedal 55, pressure adjustment unit 51 is configured to enable proper distribution of braking fluid pressure to brakes 37 through the use of liquid pressure passages 53.

Although the embodiment shown in Figure 1 illustrates a braking system that utilizes hydraulics, it is recognized that the friction braking system of Figure 1 may be a pure brake-by-wire (BBW) system, an electro-mechanical braking system, an electro-hydraulic braking system, or a hydromechanical braking system without departing from the scope of the present invention. In either embodiment, ABS module 39 is operable with controller 50 and TCM 56 for monitoring and controlling the performance of the generator 14 and the motor 40.

In the event wheels 35 enter ABS control via ABS module 39, during active regenerative braking, the torque generated by the motor 40 and/or the generator 14 is compensated. Compensation of the braking torque occurs in a manner so as to minimize or eliminate the loss of deceleration. The loss of deceleration may occur as a result of the operation of the motor 40, the generator 14 or an ABS event experienced by wheels 36 which causes the elimination of braking torque.

In one embodiment, the torque generated by the motor 40 and the generator 14 is reduced in a controlled manner at a determined rate. Accordingly, the reduction in torque mitigates any "lunge forward" feeling experienced by vehicle occupants when wheels 35 enter ABS mode and regenerative braking is reduced.

In one embodiment, the ABS module 39 and the speed sensor 49 detect a potentially locking wheel slip event experienced by the front wheels 35. It is recognized that the term "wheel slip" herein refers to any condition which causes the engagement/activation of the ABS.

Upon detection of the wheel slip event (i.e., activation of ABS control) by front wheels 35, the ABS module 39 generates a signal for the TCM 56 that indicates the occurrence of ABS activation. As such, the TCM 56 is configured to generate signals for a controlled reduction of regenerative braking torque being applied to rear wheels 36 by the motor 40 and the generator 14. Thus, when the rear wheels 36 reach the road surface location where the front wheels 35 experienced the wheel slip condition, the torque has been reduced in a manner that mitigates the "lunge forward" feeling that is caused by conventional regenerative braking systems. Consequently, when the ABS system is activated for the rear wheels 36, any subsequent reduction in regenerative applied torque is less noticeable to the vehicle occupants.

In the event the ABS system is not activated within a determined time period for the rear wheels 36, the amount of regenerative braking torque allowed at the rear wheels 36 may be increased. Furthermore, in the event the vehicle 10 stops or begins accelerating, the TCM 56 generates signals for the generator 14 and the motor 50 to enable the application of an additional amount of torque to the rear wheels 36. In one aspect of the present invention, the amount of added regenerative braking torque is equivalent to the original unreduced amount of regenerative braking torque.

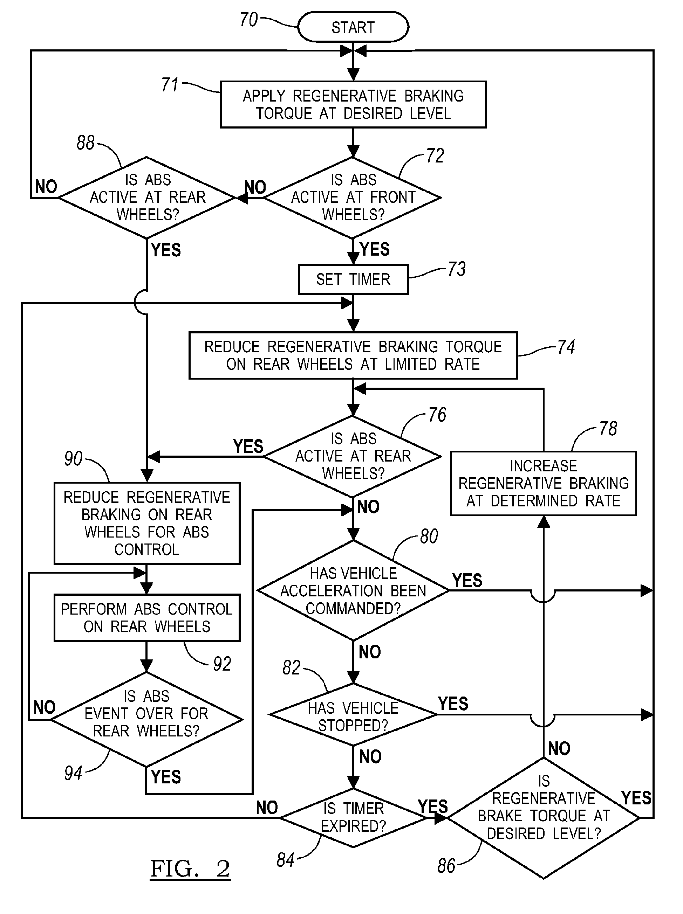

Now, referring to Figure 2, a flow diagram is shown that illustrates a method for controlling the application of regenerative braking torque generated by the generator 14 and the motor 50. As described above, the torque generated by the generator 14 and/or the motor 50 provides motive force to the vehicle. Accordingly, block 70 is the entry point for the method.

As depicted by block 71, the method includes applying regenerative braking torque at a desired level. As described in the foregoing, the generator and/or motor of the vehicle are capable of providing regenerative braking torque.

Block 72 depicts the determination of whether the ABS system has been engaged for the front wheels of the vehicle. If the ABS system has been activated, a timer is set as shown by block 73. It is recognized that in some instances it is possible for the front wheels of the vehicle to experience an ABS event, while the rear wheels do not experience an ABS event. As such, the time for which the timer is set may be dependent upon the vehicle wheel base and speed of the vehicle. In an alternative embodiment, the time for which the timer is set may be a predetermined time period, in a range of 45 seconds to one minute.

As shown by block 74, the method reduces the regenerative braking torque applied to the rear wheels at a determined rate.

Block 76 depicts the determination of whether the ABS system has been activated at the rear wheels. If the ABS system has not been activated, block 80 occurs.

At block 80, the method determines whether the vehicle has received an acceleration command via the vehicle's accelerator pedal. If the vehicle has not received an acceleration command, block 82 occurs.

At block 82, the method determines whether the vehicle has stopped. If the vehicle has not stopped, step 84 occurs and it is determined whether the timer originally set at block 73, has expired. If the timer has expired, the method determines whether the regenerative braking torque is at a desired level as shown by block 86. If the regenerative braking torque is not at a desired level, block 78 occurs.

At block 78, the regenerative braking torque is increased at a determined rate. The increase in regenerative braking torque occurs in a manner that is minimally noticeable, if not completely unnoticeable by vehicle occupants. If the regenerative braking torque is at a desired level, the method returns to block 71.

Referring back to block 80, if the vehicle acceleration has been commanded, the method returns to block 71.

Referring to block 82, if the vehicle has stopped, the method also returns to block 71.

Referring to block 84, if the timer has not expired, the method returns to block 74.

Now, referring back to block 72, if the ABS system has not been activated at the front wheels, block 88 occurs. At block 88, the method determines whether the ABS has been activated at the rear wheels. If the ABS system has not been activated at the rear wheels, the method returns to block 71. In the event the ABS has been activated at the rear wheels, block 90 occurs.

At block 90, the method reduces the regenerative braking torque applied to the rear wheels for ABS control. Additionally, referring to block 76, if the ABS is active at the rear wheels, the method also reduces the regenerative braking on the rear wheels for ABS control.

Block 92 depicts the performance of ABS control on the rear wheels. As shown by block 94, it is determined whether the ABS event is over. If the ABS event has not ended, the method returns to block 92. If the ABS event has ended, the method returns to block 80.

In alternative embodiments, the regenerative braking torque may be increased without waiting for the timer to expire in the event the rear wheels have experienced an ABS event that has ended (as determined at block 94).

It will be appreciated that in the case of a front drive vehicle the regenerative braking will be supplied to the front wheels and whether one or more of the rear wheels are experiencing an anti-lock braking system event will be determined and the braking torque applied to the front wheel will compensated at a determined rate upon determining whether the one or more rear wheel is experiencing the ABS event.

It will be further appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention.

## Claims

1. A method of controlling a vehicle (10) having multiple wheels (35, 36) and a regenerative braking system for applying a braking torque to at least one of the wheels (36) **characterised in that** the method comprises applying a braking torque to one wheel (36), determining whether a second wheel (35) is experiencing an anti-lock braking system (ABS) event and compensating at a determined rate the braking torque applied to the one wheel (36) upon determining whether the second wheel (35) is experiencing the ABS event.

2. A method as claimed in claim 1 wherein the method further comprises determining whether the one wheel (36) is experiencing an ABS event.

3. A method as claimed in claim 2 wherein the method further comprises applying braking torque to the one wheel (36) upon determining that the ABS event has ended.

4. A method as claimed in any of claims 1 to 3 wherein compensating, at the determined rate, the braking torque applied to the one wheel (36) includes reducing the braking torque applied to the one wheel (36).

5. A method as claimed in any of claims 1 to 4 wherein the one wheel includes at least one wheel of a set of rear wheels (36) of the vehicle (10) and the second wheel includes at least one wheel of a set of front wheels (35) of the vehicle (10) .

6. A method as claimed in claim 5 wherein the vehicle is a hybrid-electric vehicle (10) having at least one electric machine (14, 40) and the method further comprises applying regenerative braking torque to the rear wheels (36), determining whether the front wheels (35) are experiencing an anti-lock braking system (ABS) event, through the use of an anti-lock braking system and compensating, at a determined rate, the regenerative braking torque being applied to the rear wheels (36) upon determining that the front wheels (35) are experiencing the ABS event, the regenerative braking torque being generated by the at least one electric machine (14, 40).

7. A method as claimed in claim 6 wherein the regenerative braking torque applied to the rear wheels (36) is applied subsequent to the expiration of a timer.

8. A vehicle (10) having multiple wheels (35, 36) and a regenerative braking system for applying a braking torque to at least one of the wheels (36) **characterised in that** the vehicle (10) is configured to apply a braking torque to one wheel (36), determine whether at least a second wheel (35) is experiencing an anti-lock braking system (ABS) event and, at a determined rate, compensate the regenerative braking torque applied to the one wheel (36) upon determining that the second wheel (35) is experiencing the ABS event.

9. A vehicle as claimed in claim 8 wherein the vehicle is further configured to determine whether the one wheel (36) is experiencing an ABS event and is further configured to enable the application of regenerative braking torque to the one wheel (36) upon determining that the ABS event has ended.

10. A vehicle as claimed in claim 8 or in claim 9 wherein the vehicle (10) is configured to compensate, at the determined rate, the regenerative braking torque applied to the one wheel (36) by reducing the regenerative braking torque applied to the one wheel (36).
